# EUROPEAN PATENT APPLICATION

(11) **EP 4 198 089 A1**
(43) Date of publication of application: **21.06.2023**
(21) Application number: 21858314.4
(22) Date of filing: 17.08.2021
(51) Int. Cl.: C08L 77/00, C08K 5/13, C08K 5/17, C08K 5/36, C08K 5/49, C08L 23/00

(54) **POLYAMIDE RESIN COMPOSITION**

(30) Priority: 17.08.2020 JP 2020137667
(71) Applicant: UBE Corporation, Ube-shi, Yamaguchi 755-8633 (JP)
(72) Inventor: KURATA Hideyuki, Ube-shi, Yamaguchi 755-8633 (JP); FUKUI Yasuharu, Ube-shi, Yamaguchi 755-8633 (JP); HORIIKE Yuma, Ube-shi, Yamaguchi 755-8633 (JP)
(74) Representative: Hoffmann Eitle
(86) International application number: PCT/JP2021/030077
(87) International publication number: WO 2022/039170

(57) **Abstract**

Provided is a polyamide resin composition which gives molded articles excellent in terms of mechanical strength and impact resistance. The polyamide resin composition comprises 52-88 mass% aliphatic polyamide resin (A), 5-25 mass% copolyolefin resin (B) having functional groups, up to 20 mass% olefin homopolymer (C) containing no functional group, and 0.05-3.0 mass% both a primary antioxidant (D) and a secondary antioxidant (E), the amount of the polyamide resin composition being taken as 100 mass%, wherein the copolyolefin resin (B) having functional groups has an MFR, as determined at a temperature of 230°C and a load of 2,160 g in accordance with ASTM D1238, greater than 1.0 g/10 min but less than 5.0 g/10 min, the polyamide resin composition containing the secondary antioxidant (E) in an amount larger than that of the primary antioxidant (D).

## Description

### TECHNICAL FIELD

The present invention relates to a polyamide resin composition.

### BACKGROUND ART

Polyamide resins have been known as a resin having excellent gas barrier properties, and various applications of the resins demand a polyamide resin composition having gas barrier properties.

With respect to the polyamide resin composition, a polyamide resin composition comprising a polyamide resin, a modified polyolefin resin, and an unmodified polyolefin resin in a predetermined proportion and having predetermined physical properties has been proposed, and it has been reported that a blow molded article having excellent barrier properties and impact resistance can be obtained with high productivity (see, for example, Patent Literature 1). Further, a polyamide resin composition comprising an aliphatic polyamide resin having a relative viscosity ηr of less than 2.60, a modified polyolefin having a density of 0.895 g/cm³ or less, and an unmodified polyolefin having an MFR value of 3.0 to 30 g/10 min in a predetermined proportion has been proposed, and it has been reported that a polyamide resin composition having excellent low-temperature impact resistance and surface properties can be provided (see, for example, Patent Literature 2).

### CITATION LIST

### Patent Literature

Patent Literature 1: JP 2017-88661A
Patent Literature 2: WO 2019/54109A

### SUMMARY OF INVENTION

### Technical Problem

The molded articles of the polyamide resin compositions described in Patent Literatures 1 and 2 exhibit excellent gas barrier properties and a certain impact resistance, but a molded article having further excellent impact resistance is required. Particularly, in the application of a molded article which is in contact with a high pressure gas, there is demanded a molded article having such excellent mechanical strength and impact resistance that the molded article can endure the high pressure gas.

An object of the present invention is to provide a polyamide resin composition which is advantageous in that a molded article formed from the polyamide resin composition has excellent mechanical strength and excellent impact resistance.

### Solution to Problem

The present invention is directed to the following items [1] to [14].
[1] A polyamide resin composition comprising an aliphatic polyamide resin (A) in an amount of 52 to 88% by mass, a functional group-containing copolymerized polyolefin resin (B) in an amount of 5 to 25% by mass, a functional group-non-containing olefin homopolymer (C) in an amount of 20% by mass or less, and a primary antioxidant (D) and a secondary antioxidant (E) in a total amount of 0.05 to 3.0% by mass, based on 100% by mass of the polyamide resin composition, the functional group-containing copolymerized polyolefin resin (B) having an MFR of more than 1.0 to less than 5.0 g/10 minutes, as measured at a temperature of 230°C and under a load of 2,160 g in accordance with ASTM D1238, wherein the polyamide resin composition contains the secondary antioxidant (E) in an amount larger than that of the primary antioxidant (D).
[2] The polyamide resin composition according to item [1] above, wherein the functional group-containing copolymerized polyolefin resin (B) has an MFR of more than 1.0 to 3.0 g/10 minutes, as measured at a temperature of 230°C and under a load of 2,160 g in accordance with ASTM D1238.
[3] The polyamide resin composition according to item [1] or [2] above, wherein the aliphatic polyamide resin (A) has a relative viscosity of 2.2 to 2.8, as measured at 25°C with respect to 1 g of the polyamide resin which is dissolved in 100 ml of 96% sulfuric acid in accordance with JIS K 6920.
[4] The polyamide resin composition according to any one of items [1] to [3] above, which contains the aliphatic polyamide resin (A) in an amount of 60 to 88% by mass, based on 100% by mass of the polyamide resin composition.
[5] The polyamide resin composition according to any one of items [1] to [4] above, which contains the functional group-containing copolymerized polyolefin resin (B) in an amount of 6 to 22% by mass, based on 100% by mass of the polyamide resin composition.
[6] The polyamide resin composition according to any one of items, [1] to [5] above, which contains the functional group-non-containing olefin homopolymer (C) in an amount of 5 to 20% by mass, based on 100% by mass of the polyamide resin composition.
[7] The polyamide resin composition according to any one of items [1] to [6] above, wherein the content of the primary antioxidant (D) in 100% by mass of the polyamide resin composition is 0.02 to less than 1.5% by mass.
[8] The polyamide resin composition according to any one of items [1] to [7] above, wherein the content of the secondary antioxidant (E) in 100% by mass of the polyamide resin composition is 0.03 to 2.98% by mass.
[9] The polyamide resin composition according to any one of items [1] to [8] above, wherein the primary antioxidant (D) is at least one member selected from the group consisting of a phenolic compound and an amine compound.
[10] The polyamide resin composition according to any one of items [1] to [9] above, wherein the secondary antioxidant (E) is at least one member selected from the group consisting of a phosphorus compound and a sulfur compound.
[11] The polyamide resin composition according to any one of items [1] to [10] above, which has a flexural modulus (in 50% RH at 23°C) of 1,000 to 2,000 MPa and a flexural strength (in 50% RH at 23°C) of 50 to 80 MPa, as obtained in accordance with ISO 178.
[12] The polyamide resin composition according to any one of items [1] to [11] above, which has a Charpy impact strength (notched, in 50% RH at 23°C) of 20 kJ/m² or more, as obtained in accordance with ISO 179-111eA.
[13] The polyamide resin composition according to any one of items [1] to [12] above, which has a Charpy impact strength (notched, in 50% RH at 23°C) of 45 kJ/m² or more, as obtained in accordance with ISO 179-1/1eA.
[14] The polyamide resin composition according to any one of items [1] to [13] above, which is for use in a molded article which is in contact with a high pressure gas.

### Advantageous Effects of Invention

In the present invention, there can be provided a polyamide resin composition which is advantageous in that a molded article formed from the polyamide resin composition has excellent mechanical strength and excellent impact resistance.

### DESCRIPTION OF EMBODIMENTS

In the present specification, with respect to the amount of the component contained in the composition, when two or more substances corresponding to the component of the composition are present, the amount of the component means a total amount of the two or more substances present in the composition unless otherwise specified. Further, the relative viscosity defined for the polyamide resin means a value as measured at 25°C with respect to 1 g of the polyamide resin which is dissolved in 100 ml of 96% sulfuric acid in accordance with JIS K 6920.

The polyamide resin composition of the present invention comprises an aliphatic polyamide resin (A) in an amount of 52 to 88% by mass, a functional group-containing copolymerized polyolefin resin (B) in an amount of 5 to 25% by mass, a functional group-non-containing olefin homopolymer (C) in an amount of 20% by mass or less, and a primary antioxidant (D) and a secondary antioxidant (E) in a total amount of 0.05 to 3.0% by mass, based on 100% by mass of the polyamide resin composition, wherein the functional group-containing copolymerized polyolefin resin (B) has an MFR of more than 1.0 to less than 5.0 g/10 minutes, as measured at a temperature of 230°C and under a load of 2,160 g in accordance with ASTM D1238, wherein the polyamide resin composition contains the secondary antioxidant (E) in an amount larger than that of the primary antioxidant (D). In the present invention, there can be provided a polyamide resin composition which is advantageous in that a molded article formed from the polyamide resin composition has excellent mechanical strength and excellent impact resistance.

### <Aliphatic polyamide resin (A)>

The aliphatic polyamide resin (A) comprises an aliphatic homopolyamide resin (A-1) and/or an aliphatic copolyamide resin (A-2).

### (Aliphatic homopolyamide resin (A-1))

The aliphatic homopolyamide resin (A-1) means a polyamide resin in which a single monomer component solely constitutes the aliphatic polyamide resin. The aliphatic homopolyamide resin (A-1) may be one which comprises at least one of a single lactam and an aminocarboxylic acid that is a hydrolysate of the lactam, or may be one which comprises a combination of one aliphatic diamine and one aliphatic dicarboxylic acid. When the monomer component constituting the aliphatic polyamide resin is a combination of an aliphatic diamine and an aliphatic dicarboxylic acid, a combination of one aliphatic diamine and one aliphatic dicarboxylic acid is regarded as one monomer component.

Examples of the aliphatic homopolyamide resins (A-1) include an aliphatic homopolyamide resin comprising an aliphatic diamine and an aliphatic dicarboxylic acid, and an aliphatic homopolyamide resin comprising a lactam or an aminocarboxylic acid.

As examples of the monomer components constituting the aliphatic homopolyamide resin (A-1), there can be mentioned a combination of an aliphatic diamine having 2 to 20 carbon atoms, preferably having 4 to 12 carbon atoms, and an aliphatic dicarboxylic acid having 2 to 20 carbon atoms, preferably having 6 to 12 carbon atoms, and a lactam or aminocarboxylic acid having 4 to 12 carbon atoms.

Examples of the aliphatic diamines include ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine. Examples of the aliphatic dicarboxylic acids include oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid.

Examples of combinations of an aliphatic diamine and an aliphatic dicarboxylic acid include a combination of tetramethylenediamine and sebacic acid, a combination of hexamethylenediamine and adipic acid, a combination of hexamethylenediamine and sebacic acid, and a combination of hexamethylenediamine and dodecanedioic acid, and an equimolar salt of the above combination is preferably used.

Examples of the lactams include s-caprolactam, enantholactam, undecanelactam, dodecanelactam, α-pyrrolidone, and α-piperidone. From the viewpoint of the productivity, the lactam is preferably ε-caprolactam, undecanelactam, or dodecanelactam. Examples of the aminocarboxylic acids include 6-aminocaproic acid, 7-aminoheptanoic acid, 9-aminononanoic acid, 11-aminoundecanoic acid, and 12-aminododecanoic acid. From the viewpoint of the productivity, the aminocarboxylic acid is preferably 6-aminocaproic acid, 11-aminoundecanoic acid, or 12-aminododecanoic acid.

Specific examples of the aliphatic homopolyamide resins (A-1) include polycaprolactam (polyamide 6), polyenantholactam (polyamide 7), polyundecanelactam (polyamide 11), polylauryllactam (polyamide 12), polyhexamethylene adipamide (polyamide 66), polytetramethylene decanamide (polyamide 410), polytetramethylene dodecanamide (polyamide 412), polypentamethylene azelamide (polyamide 59), polypentamethylene sebacamide (polyamide 510), polypentamethylene dodecanamide (polyamide 512), polyhexamethylene azelamide (polyamide 69), polyhexamethylene sebacamide (polyamide 610), polyhexamethylene dodecanamide (polyamide 612), polynonamethylene adipamide (polyamide 96), polynonamethylene azelamide (polyamide 99), polynonamethylene sebacamide (polyamide 910), polynonamethylene dodecanamide (polyamide 912), polydecamethylene adipamide (polyamide 106), polydecamethylene azelamide (polyamide 109), polydecamethylene decanamide (polyamide 1010), polydecamethylene dodecanamide (polyamide 1012), polydodecamethylene adipamide (polyamide 126), polydodecamethylene azelamide (polyamide 129), polydodecamethylene sebacamide (polyamide 1210), polydodecamethylene dodecanamide (polyamide 1212), and polyamide 122.

From the viewpoint of the productivity, the aliphatic homopolyamide resin (A-1) is preferably at least one member selected from the group consisting of polyamide 6, polyamide 410, polyamide 66, polyamide 610, polyamide 612, polyamide 11, and polyamide 12, especially preferably polyamide 6 and/or polyamide 66.

A single aliphatic homopolyamide resin (A-1) may be used, or two or more aliphatic homopolyamide resins (A-1) may be used in combination.

### (Aliphatic copolyamide resin (A-2))

The aliphatic copolyamide resin (A-2) means a polyamide resin in which a combination of two or more monomer components constitutes the aliphatic polyamide resin. The aliphatic copolyamide resin (A-2) is a copolymer of two or more members selected from the group consisting of a combination of an aliphatic diamine and an aliphatic dicarboxylic acid, a lactam, and an aminocarboxylic acid. With respect to the combination of an aliphatic diamine and an aliphatic dicarboxylic acid, a combination of one aliphatic diamine and one aliphatic dicarboxylic acid is regarded as one monomer component.

As examples of the aliphatic diamines, there can be mentioned those mentioned above as examples of the raw materials for the aliphatic homopolyamide resin (A-1).

As examples of the aliphatic dicarboxylic acids, there can be mentioned those mentioned above as examples of the raw materials for the aliphatic homopolyamide resin (A-1).

As examples of the lactams, there can be mentioned those mentioned above as examples of the raw materials for the aliphatic homopolyamide resin (A-1). As examples of the aminocarboxylic acids, there can be mentioned those mentioned above as examples of the raw materials for the aliphatic homopolyamide resin (A-1).

These aliphatic diamines, aliphatic dicarboxylic acids, lactams, and aminocarboxylic acids may be used individually or in combination.

Specific examples of the aliphatic copolyamide resins (A-2) include a caprolactam/hexamethylenediaminoadipic acid copolymer (polyamide 6/66), a caprolactam/hexamethylenediaminoazelaic acid copolymer (polyamide 6/69), a caprolactam/hexamethylenediaminosebacic acid copolymer (polyamide 6/610), a caprolactam/hexamethylenediaminoundecanedicarboxylic acid copolymer (polyamide 6/611), a caprolactam/hexamethylenediaminododecanedicarboxylic acid copolymer (polyamide 6/612), a caprolactamlaminoundecanoic acid copolymer (polyamide 6/11), a caprolactam/lauryllactam copolymer (polyamide 6/12), a caprolactam/hexamethylenediaminoadipic acid/lauryllactam copolymer (polyamide 6/66/12), a caprolactamlhexamethylenediaminoadipic acid/hexamethylenediaminosebacic acid copolymer (polyamide 61661610), and a caprolactamlhexamethylenediaminoadipic acid/hexamethylenediaminododecanedicarboxylic acid copolymer (polyamide 6/66/612). From the viewpoint of the productivity, the aliphatic copolyamide resin (A-2) is preferably at least one member selected from the group consisting of a caprolactamlhexamethylenediaminoadipic acid copolymer (polyamide 6/66), a caprolactam/hexamethylenediaminosebacic acid copolymer (polyamide 6/610), a caprolactam/aminoundecanoic acid copolymer (polyamide 6/11), a caprolactam/lauryllactam copolymer (polyamide 6/12), a caprolactam/hexamethylenediaminoadipic acid/lauryllactam copolymer (polyamide 6/66/12), and a caprolactamlhexamethylenediaminoadipic acid/hexamethylenediaminosebacic acid copolymer (polyamide 6/66/610).

A single aliphatic copolyamide resin (A-2) may be used, or two or more aliphatic copolyamide resins (A-2) may be used in combination.

### (Physical properties and contained amount of aliphatic polyamide resin (A))

From the viewpoint of the mechanical properties and moldability of the polyamide resin composition, the aliphatic polyamide resin (A) preferably has a relative viscosity of 1.5 to 5.0, as measured at 25°C with respect to 1 g of the polyamide resin which is dissolved in 100 ml of 96% sulfuric acid in accordance with JIS K 6920. The relative viscosity of aliphatic polyamide resin (A) is more preferably 2.0 to 4.5, more preferably 2.1 to 3.9, more preferably 2.1 to 3.3, further preferably 2.2 to 2.8, especially preferably 2.3 to 2.6.

When the aliphatic polyamide resin (A) comprises two or more polyamide resins having different relative viscosities, it is preferred that the relative viscosity of aliphatic polyamide resin (A) is measured in accordance with the above-mentioned procedure, but, when the relative viscosities of the individual polyamide resins and the ratios of the polyamide resins mixed are known, an average calculated from a total of values obtained by multiplying the relative viscosities by the respective ratios may be used as a relative viscosity of aliphatic polyamide resin (A).

The terminal amino group concentration of aliphatic polyamide resin (A), in terms of a terminal amino group concentration determined by neutralization titration with respect to the resin dissolved in a mixed solvent of phenol and methanol, is preferably 30 µmol/g or more, more preferably in the range of from 30 to 110 µmol/g, especially preferably in the range of from 30 to 70 µmol/g. When the terminal amino group concentration of aliphatic polyamide resin (A) is in the above range, the polyamide resin composition has excellent molding processability.

When the aliphatic polyamide resin (A) comprises two or more polyamide resins having different terminal amino group concentrations, it is preferred that the terminal amino group concentration of aliphatic polyamide resin (A) is measured by the above-mentioned neutralization titration, but, when the terminal amino group concentrations of the individual polyamide resins and the ratios of the polyamide resins mixed are known, an average calculated from a total of values obtained by multiplying the terminal amino group concentrations by the respective ratios may be used as a terminal amino group concentration of aliphatic polyamide resin (A).

The polyamide resin composition contains the aliphatic polyamide resin (A) in an amount of 52 to 88% by mass, based on 100% by mass of the polyamide resin composition. When the amount of the contained aliphatic polyamide resin (A) is in the above range, a polyamide resin composition having excellent mechanical properties and excellent moldability can be obtained. The amount of the contained aliphatic polyamide resin (A) is preferably 60 to 88% by mass, more preferably 65 to 88% by mass, further preferably 70 to 88% by mass, especially preferably 70 to 80% by mass, based on 100% by mass of the polyamide resin composition.

### (Production of the polyamide resin)

Examples of apparatuses for producing the polyamide resin include known apparatuses for producing a polyamide, such as a batch reactor, a single-stage or multistage continuous reaction apparatus, a tubular continuous reaction apparatus, and kneading reaction extruders, e.g., a single-screw kneading extruder and a twin-screw kneading extruder. Using a known method, such as melt polymerization, solution polymerization, or solid-phase polymerization, as a polymerization method, polymerization can be carried out by repeating operations such as normal pressure, reduced pressure or increased pressure. These polymerization methods can be used individually or appropriately in combination.

### functional group-containing copolymerized polyolefin resin (B)>

The functional group-containing copolymerized polyolefin resin (B) is a component which imparts mechanical strength and impact resistance to the polyamide resin composition. The functional group-containing copolymerized polyolefin resin (B) preferably has a flexural modulus of 500 MPa or less, as measured in accordance with ASTM D-790.

The functional group-containing copolymerized polyolefin resin (B) has in the molecule thereof a functional group having affinity with the aliphatic polyamide resin (A), and therefore, when a molded article is formed from the polyamide resin composition, the molded article has an improved impact resistance due to a reaction of the amino group of the polyamide resin and the functional group of the functional group-containing copolymerized polyolefin resin. The present inventors have found that when a functional group-containing olefin homopolymer is incorporated into the polyamide resin composition, a molded article obtained from the composition has an unsatisfactory Charpy impact strength. Then, the present inventors have conducted extensive and intensive studies, and, as a result, they have found that when, instead of the functional group-containing olefin homopolymer, the functional group-containing copolymerized polyolefin resin (B) is incorporated into the polyamide resin composition, a molded article obtained from the polyamide resin composition is remarkably improved in Charpy impact strength.

Examples of the functional groups of the functional group-containing copolymerized polyolefin resin (B) include a carboxyl group, an acid anhydride group, a carboxylic acid ester group, a carboxylic acid metal salt, a carboxylic acid imide group, a carboxylic acid amide group, and an epoxy group. It is considered that the amino group of aliphatic polyamide resin (A) and at least part of the above functional group are reacted with each other.

As examples of the method for introducing the above functional group into a copolymer polyolefin resin, there can be mentioned (i) a method in which a copolymerizable monomer having the functional group is copolymerized with a copolymer polyolefin resin which is being polymerized, (ii) a method in which the functional group is introduced into the molecular chain or molecular end of a copolymer polyolefin resin using, for example, a polymerization initiator or a chain transfer agent, and (iii) a method in which a compound having the functional group and a functional group capable of grafting (a graft compound) is grafted on a copolymer polyolefin resin. These methods for introducing the functional group can be used individually or appropriately in combination.

Examples of the copolymerizable monomers having the functional group and the graft compounds include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts of the above carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacylate, glycidyl itaconate, and glycidyl citraconate. These can be used individually or in combination. Of these, preferred is maleic anhydride, itaconic anhydride and/or citraconic anhydride.

The amount of the functional group contained in the functional group-containing copolymerized polyolefin resin (B), in terms of the molar number (µmol) of the functional group/the mass (g) of component (B), is preferably more than 25 to less than 150 µmol/g, more preferably 35 to less than 125 µmol/g, especially preferably 40 to 110 µmol/g. For example, when the functional group-containing copolymerized polyolefin resin (B) has a carboxyl group, an acid anhydride group, or a carboxylic acid ester group, the amount of the functional group contained in the functional group-containing copolymerized polyolefin resin (B) is measured by neutralization titration using a 0.1 N ethanol solution of KOH, and using phenolphthalein as an indicator with respect to a sample solution prepared using toluene and ethanol.

Examples of the functional group-containing copolymerized polyolefin resins (B) include an (ethylene and/or propylene)/α-olefin copolymer containing the above-mentioned functional group, and an (ethylene and/or propylene)/(α,β-unsaturated carboxylic acid and/or α,β-unsaturated carboxylic acid ester) copolymer. In these copolymers, the content of ethylene and/or propylene units is preferably 10 to 90 mol%, more preferably 20 to 80 mol%.

A single functional group-containing copolymerized polyolefin resin (B) can be used, or two or more functional group-containing copolymerized polyolefin resins (B) can be used in combination. With respect to the functional group-containing copolymerized polyolefin resin (B), an ethylene/α-olefin copolymer containing the above-mentioned functional group is preferred.

The (ethylene and/or propylene)/α-olefin copolymer is a polymer obtained by copolymerizing ethylene and an α-olefin having 3 or more carbon atoms and/or a polymer obtained by copolymerizing propylene and an α-olefin having 4 or more carbon atoms.

Examples of the α-olefins having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1 -tetradecene. These may be used individually or in combination. Of these, the (ethylene and/or propylene)/α-olefin copolymer is especially preferably an ethylene/1-butene copolymer.

Alternatively, the copolymer may be one which is obtained by copolymerizing a polyene, such as a non-conjugated diene. Examples of the non-conjugated dienes include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbomene, 5-ethylidene-2-norbomene, 5-methylene-2-norbomene, 5-isopropylidene-2-norbornene, 6-chloromethyl-5-isopropylidene-2-norbomene, 2,3-diisopropylidene-5-norbomene, 2-ethylidene-3-isopropylidene-5-norbomene, and 2-propenyl-2,5-norbomadiene. These may be used individually or in combination.

The (ethylene and/or propylene)/(α,β-unsaturated carboxylic acid and/or α,β-unsaturated carboxylic acid ester) copolymer is a polymer obtained by copolymerizing ethylene and/or propylene with an α,β-unsaturated carboxylic acid and/or α,β-unsaturated carboxylic acid ester monomer. Examples of the α,β-unsaturated carboxylic acid monomers include acrylic acid and methacrylic acid. Examples of the α,β-unsaturated carboxylic acid ester monomers include a methyl ester, an ethyl ester, a propyl ester, a butyl ester, a pentyl ester, a hexyl ester, a heptyl ester, an octyl ester, a nonyl ester, or a decyl ester of the above α,β-unsaturated carboxylic acid. These may be used individually or in combination.

The (ethylene and/or propylene)/(α,β-unsaturated carboxylic acid and/or α,β-unsaturated carboxylic acid ester) copolymer has a carboxyl group and/or a carboxylic acid ester group, and therefore is the functional group-containing copolymerized polyolefin resin (B). Even the (ethylene and/or propylene)/(α,β-unsaturated carboxylic acid and/or α,β-unsaturated carboxylic acid ester) copolymer further has a functional group other than a carboxyl group and a carboxylic acid ester group introduced by a compound having the above-mentioned functional group, the copolymer is the functional group-containing copolymerized polyolefin resin (B).

From the viewpoint of the mechanical strength and impact resistance of a molded article formed from the polyamide resin composition, the functional group-containing copolymerized polyolefin resin (B) is more preferably an ethylene/α-olefin copolymer having maleic anhydride, itaconic anhydride, or citraconic anhydride introduced, further preferably an ethylene/α-olefin copolymer having maleic anhydride introduced, especially preferably an ethylene/1-butene copolymer having maleic anhydride introduced.

The functional group-containing copolymerized polyolefin resin (B) may contain a functional group-non-containing copolymerized polyolefin resin in such an amount that the function and properties of the polyamide resin composition are not sacrificed.

The functional group-containing copolymerized polyolefin resin (B) has an MFR of more than 1.0 to less than 5.0 g/10 minutes, as measured at a temperature of 230°C and under a load of 2,160 g in accordance with ASTM D1238. When the MFR of the functional group-containing copolymerized polyolefin resin (B) is in the above-mentioned range, there can be obtained a polyamide resin composition which is advantageous in that a molded article formed from the polyamide resin composition has excellent balance between the stiffness and the flexibility as well as excellent impact resistance. The MFR of the functional group-containing copolymerized polyolefin resin (B), as measured by the above-mentioned method, is preferably more than 1.0 to 3.0 g/10 minutes, especially preferably more than 1.0 to 2.5 g/10 minutes.

The polyamide resin composition contains the functional group-containing copolymerized polyolefin resin (B) in an amount of 5 to 25% by mass, based on 100% by mass of the polyamide resin composition. When the amount of the contained functional group-containing copolymerized polyolefin resin (B) is in the above-mentioned range, a polyamide resin composition having excellent impact resistance can be obtained. The amount of the contained functional group-containing copolymerized polyolefin resin (B) is preferably 5 to 24% by mass, more preferably 6 to 22% by mass, especially preferably 6 to 12% by mass, based on 100% by mass of the polyamide resin composition.

### <Functional group-non-containing olefin homopolymer (C)>

The polyamide resin composition can contain the functional group-non-containing olefin homopolymer (C). The polyamide resin composition contains the functional group-non-containing olefin homopolymer (C), and therefore the polyamide resin composition can be improved in fluidity and moldability. The homopolymer means a polymer obtained by polymerization of a single type of monomer.

Examples of olefins in the functional group-non-containing olefin homopolymer (C) include ethylene and an α-olefin having 3 or more carbon atoms. As examples of α-olefins having 3 or more carbon atoms, there can be mentioned those mentioned above as examples in connection with the functional group-containing copolymerized polyolefin resin (B). Of these, with respect to the functional group-non-containing olefin homopolymer (C), an ethylene homopolymer or a propylene homopolymer is preferred, and an ethylene homopolymer is more preferred. Examples of ethylene homopolymers include high-density polyethylene (HDPE), medium-density polyethylene (MDPE), low-density polyethylene (LDPE), and linear low-density polyethylene (LLDPE). The functional group-non-containing olefin homopolymer (C) can be appropriately selected according to the performance required and the use of and the molding method for the composition.

A single functional group-non-containing olefin homopolymer (C) may be used, or two or more functional group-non-containing olefin homopolymers (C) may be used in combination.

The polyamide resin composition contains the functional group-non-containing olefin homopolymer (C) in an amount of 20% by mass or less, preferably 5 to 20% by mass, more preferably 10 to 20% by mass, based on 100% by mass of the polyamide resin composition. When the amount of the contained functional group-non-containing olefin homopolymer (C) is in the above range, a polyamide resin composition having excellent fluidity and excellent moldability can be obtained.

### <Primary antioxidant (D) and secondary antioxidant (E)>

The polyamide resin composition contains the primary antioxidant (D) and the secondary antioxidant (E) in a total amount of 0.05 to 3.0% by mass. Generally, when a resin (R) is exposed to, for example, oxygen, heat, or a light, a free radical is formed, and then reacted with oxygen to form a peroxy radical (ROO·). The peroxy radical has very high activity, and abstracts hydrogen from another organic material and is changed to a hydroperoxide to form a new free radical, and thus undergoes a chain reaction (autoxidation), promoting deterioration of the resin. In the present invention, for preventing such deterioration of a resin, a primary antioxidant and a secondary antioxidant are used in combination, and the ratio of the amounts of the antioxidants is specified. The primary antioxidant (D) indicates a compound having such a function that it scavenges a free radical generated due to an effect of, e.g., oxygen, heat, or a light to prevent autoxidation, and the secondary antioxidant (E) indicates a compound having such a function that it decomposes a hydroperoxide into a harmless compound.

A single primary antioxidant (D) and a single secondary antioxidant (E) may be individually used, or two or more primary antioxidants (D) and two or more secondary antioxidants (E) may be used in combination, respectively.

From the viewpoint of scavenging a peroxy radical, the primary antioxidant (D) is preferably at least one member selected from the group consisting of a phenolic compound and an amine compound, more preferably a phenolic compound, further preferably a compound having at least one hydroxyphenyl group having a bulky substituent, such as a t-butyl group, at the ortho-position with respect to the hydroxyl group, especially preferably a compound having the two or more hydroxyphenyl groups.

Specific examples of phenolic compounds include N,N'-hexamethylenebis(3,5-di-t-butyl-4-hydroxy-hydrocinnamamide) (Irganox (registered trademark) 1098, manufactured by BASF Japan Ltd.; SONGNOX (registered trademark) 1098, manufactured by Songwon Industrial Co., Ltd.), pentaerythrityl-tetrakis[3-(3,5-di-t-butyl-4-hydroxyphenyl)-propionate] (Irganox (registered trademark) 1010, manufactured by BASF Japan Ltd.), ethylenebis(oxyethylene)bis[3-(5-t-butyl-4-hydroxy-m-tolyl)propionate] (Irganox (registered trademark) 245, manufactured by BASF Japan Ltd.), and 3,9-bis[2-[3-(3-t-butyl-4-hydroxy-5-methylphenyl)propionyloxy]-1,1-dimethylethyl]-2,4,8,10-tetraoxaspiro[5.5]undecane (Sumilizer (registered trademark) GA-80, manufactured by Sumitomo Chemical Co., Ltd.).

Specific examples of amine compounds include N-(3-methacryloyloxy-2-hydroxypropyl)-N'-phenyl-p-phenylenediamine, phenyl-α-naphthylamine, phenyl-β-naphthylamine, aldol-α-naphthylamine, a reaction product of phenyl-β-naphthylamine and acetone, p-isopropoxydiphenylamine, p-(p-toluenesulfonylamide)-diphenylamine, a reaction product of diphenylamine and acetone, a reaction product of diphenylamine and diisobutylene, N,N'-diphenyl-p-phenylenediamine, N-isopropyl-N'-phenyl-p-phenylenediamine, N-cyclohexyl-N'-phenyl-p-phenylenediamine, N,N'-bis(1,4-dimethylpentyl)-p-phenylenediamine, a polymerization product of 2,2,4-trirnethyl-1,2-dihydroquinoline, 6-ethoxy-2,2,4-trimethyl-1,2-dihydroquinoline, and 6-dodecyl-2,2,4-trimethyl-1,2-dihydroquinoline.

From the viewpoint of the decomposition of a peroxide and stabilizing a peroxy radical, the secondary antioxidant (E) is preferably at least one member selected from the group consisting of a phosphorus compound and a sulfur compound, more preferably a phosphorus compound, further preferably a triaryloxyphosphine compound, especially preferably a triphenyloxyphosphine compound having a bulky substituent, such as a t-butyl group, at the ortho-position with respect to the oxygen atom boned to the benzene ring.

Specific examples of phosphorus compounds include tris(2,4-di-t-butylphenyl) phosphite (Irgafos 168 (registered trademark), manufactured by BASF Japan Ltd.; SONGNOX (registered trademark) 1680, manufactured by Songwon Industrial Co., Ltd.), bis(2,6-di-t-butyl-4-methylphenyl)pentaerythritol diphosphite (ADK STAB (registered trademark) PEP-36, manufactured by ADEKA Corporation), a biphenyl comprised mainly of tetrakis(2,4-di-tert-butylphenoxy)-4,4-biphenyl diphosphine, and a reaction product of phosphorus trichloride and 2,4-di-tert-butylphenol (Hostanox (registered trademark) P-EPQ P, manufactured by Clariant Japan K.K.).

Specific examples of sulfur compounds include thioether compounds, such as distearyl-3,3-thiodipropionate (Irganox (registered trademark) PS802, manufactured by BASF Japan Ltd.), pentaerythrityl tetrakis(3-laurylthiopropionate) (Sumilizer (registered trademark) TP-D, manufactured by Sumitomo Chemical Co., Ltd.), and didodecyl (3,3'-thiodipropionate) (Irganox (registered trademark) PS800, manufactured by BASF Japan Ltd.).

The polyamide resin composition contains the primary antioxidant (D) and the secondary antioxidant (E) in a total amount of 0.05 to 3.0% by mass, based on 100% by mass of the polyamide resin composition. When the total amount of the contained primary antioxidant (D) and secondary antioxidant (E) is in the above-mentioned range, there can be obtained a polyamide resin composition which is advantageous in that it is prevented from suffering oxidative deterioration, so that a molded article formed from the polyamide resin composition exhibits excellent mechanical strength. The total amount of the contained primary antioxidant (D) and secondary antioxidant (E) is preferably 0.10 to 2.5% by mass, more preferably 0.15 to 2.0% by mass, especially preferably 0.20 to 1.5% by mass, based on 100% by mass of the polyamide resin composition.

The polyamide resin composition contains the secondary antioxidant (E) in an amount larger than that of the primary antioxidant (D). The amount of the contained secondary antioxidant (E) is larger than that of the contained primary antioxidant (D), and therefore a hydroperoxide which is formed by the primary antioxidant (D) can be satisfactorily stabilized, and further coloring of a molded article obtained from the polyamide resin composition and lowering of the mechanical strength of the molded article due to oxidative deterioration can be suppressed. With respect to the ratio of the contained primary antioxidant (D) and secondary antioxidant (E), from the viewpoint of the balance between the suppression of coloring of the polyamide resin composition and the antioxidant effect, the mass of the secondary antioxidant (E) is preferably more than 1 to 5 times, more preferably more than 1.2 to 4 times, especially preferably more than 1.5 to 3 times the mass of the primary antioxidant (D).

The content of the primary antioxidant (D) in 100% by mass of the polyamide resin composition is preferably 0.02 to less than 1.5% by mass, more preferably 0.05 to 1.0% by mass, especially preferably 0.10 to 0.50% by mass.

The content of the secondary antioxidant (E) in 100% by mass of the polyamide resin composition is preferably 0.03 to 2.98% by mass, more preferably 0.10 to 2.0% by mass, especially preferably 0.15 to 1.0% by mass.

### <Additional component>

The polyamide resin composition can contain an additional component in such an amount that the effects of the present invention are not sacrificed. Examples of additional components include a polyamide resin other than the aliphatic polyamide resin (A), e.g., a polyamide resin having an alicyclic or aromatic group in the principal chain or side chain; a resin other than the functional group-containing copolymerized polyolefin resin (B) and the functional group-non-containing olefin homopolymer (C); a plasticizer; an antioxidant other than the primary antioxidant (D) and secondary antioxidant (E), e.g., an inorganic antioxidant; a reinforcement, such as an organic fiber and an inorganic fiber; and function imparting agents, such as a foaming agent, a weathering agent, a crystal nucleating agent, a crystallization promoter, a crystallization retarder, a release agent, a lubricant, an antistatic agent, a flame retardant, a flame retardant auxiliary, a pigment, and a dye. The additional component is not the aliphatic polyamide resin (A), the functional group-containing copolymerized polyolefin resin (B), the functional group-non-containing olefin homopolymer (C), the primary antioxidant (D), or the secondary antioxidant (E).

The polyamide resin composition may contain a crystal nucleating agent as an additional component according to the use of the molded article. The crystal nucleating agent includes an inorganic nucleating agent and an organic nucleating agent. Examples of inorganic nucleating agents include talc, mica, synthetic mica, glass flakes, non-swelling mica, fullerene, carbon nanotubes, carbon black, graphite, a metal foil, ceramic beads, clay, sericite, zeolite, bentonite, aluminum hydroxide, dolomite, kaolin, silica, powdered silicic acid, a feldspar powder, potassium titanate, Shirasu balloon, calcium carbonate, magnesium carbonate, barium sulfate, calcium oxide, aluminum oxide, titanium oxide, magnesium oxide, aluminum silicate, silicon oxide, magnesium hydroxide, gypsum, novaculite, dawsonite, white clay, a glass fiber, a carbon fiber, a graphite fiber, a metal fiber, a potassium titanate whisker, an aluminum borate whisker, a magnesium whisker, a silicon whisker, wollastonite, sepiolite, a slag fiber, zonolite, ellestadite, a gypsum fiber, a silica fiber, a silica-alumina fiber, a zirconia fiber, a boron nitride fiber, a silicon nitride fiber, and a boron fiber. Of these, when the polyamide resin composition is used as a material for a high pressure gas tank, talc is preferred from the viewpoint of improving the crystallinity of the polyamide resin composition to suppress gas transmission.

Examples of organic nucleating agents include a thermoplastic resin having a melting point higher than that of the aliphatic polyamide resin (A), a fatty acid metal salt, benzylidenesorbitol, quinacridone, and cyanine blue.

### [Method for producing the polyamide resin composition]

With respect to the method for producing the polyamide resin composition, there is no particular limitation, and, for example, the method described below can be used.

When the aliphatic polyamide resin (A), the functional group-containing copolymerized polyolefin resin (B), the functional group-non-containing olefin homopolymer (C), the primary antioxidant (D), the secondary antioxidant (E), and optional additional components are mixed with each other, a generally known melt-kneading machine, such as a single-screw or twin-screw extruder, a Banbury mixer, a kneader, or a mixing roll, is used. For example, there are a method in which, using a twin-screw extruder, all the raw materials are mixed and then melt-kneaded; a method in which part of the raw materials are mixed and then melt-kneaded, and the remaining raw materials are further mixed and melt-kneaded; and a method in which part of the raw materials are mixed and then, while melt-kneading the resultant mixture, the remaining raw materials are mixed using a side feeder, and any of these methods may be used.

### [Physical properties of the polyamide resin composition]

The polyamide resin composition preferably has a flexural modulus (in 50% RH at 23°C) of 1,000 to 2,000 MPa and a flexural strength (in 50% RH at 23°C) of 50 to 80 MPa, as obtained in accordance with ISO 178. When the flexural modulus and flexural strength of the polyamide resin composition are in the above respective ranges, a molded article formed from the polyamide resin composition has excellent balance between the stiffness and the flexibility, and thus can obtain a resistance to a pressure from the inside or outside of the molded article, and therefore the polyamide resin composition can be especially preferably used in the application of a molded article which is in contact with a high pressure gas. When the flexural modulus of the polyamide resin composition is less than 1,000 MPa or the flexural strength of the polyamide resin composition is less than 50 MPa, it is likely that a molded article formed from the polyamide resin composition is easily fractured. When the flexural modulus is more than 2,000 MPa or the flexural strength is more than 80 MPa, it tend to be difficult to further process the molded article, and it is likely that the molded article has poor flexibility and rather has poor impact resistance. The flexural modulus of the polyamide resin composition is more preferably 1,200 to 2,000 MPa, further preferably 1,400 to 2,000 MPa, further preferably 1,400 to 1,900 MPa, further preferably 1,400 to 1,700 MPa, especially preferably 1,400 to 1,600 MPa. The flexural strength of the polyamide resin composition is more preferably 50 to 79 MPa, further preferably 55 to 78 MPa, especially preferably 60 to 75 MPa.

The polyamide resin composition preferably has a Charpy impact strength (notched, in 50% RH at 23°C) of 20 kJ/m² or more, as obtained in accordance with ISO 179-111eA. When the Charpy impact strength of the polyamide resin composition is in the above-mentioned range, a molded article formed from the polyamide resin composition has excellent impact resistance, and hence the polyamide resin composition can be preferably used in the application of a molded article which is in contact with a high pressure gas. The Charpy impact strength is more preferably 45 kJ/m² or more, further preferably 60 kJ/m² or more, especially preferably 80 kJ/m² or more. With respect to the upper limit of the Charpy impact strength, there is no particular limitation, but the Charpy impact strength is generally 150 kJ/m² or less.

### [Use of the polyamide resin composition]

With respect to the use of the polyamide resin composition, there is no particular limitation, and the polyamide resin composition can be used in the production of a molded article using a known method. Specifically, the polyamide resin composition can be used in the production of a molded article by, for example, press molding, blow molding, extrusion, injection molding, or rotational molding, and can be especially preferably used in the production of a molded article by injection molding.

The polyamide resin composition is advantageous in that a molded article formed from the polyamide resin composition has excellent balance between the stiffness and the flexibility, excellent gas barrier properties, and excellent impact resistance. Therefore, the polyamide resin composition is preferably used in a molded article which is in contact with a high pressure gas, specifically, a compressed gas having a pressure of 1 Mpa or more at a normal temperature, for example, a tank, a tube, a hose, or a film, which is in contact with a high pressure gas. With respect to the type of the gas, there is no particular limitation, and examples include hydrogen, nitrogen, oxygen, helium, methane, butane, propane, and natural gas, and preferred is a gas having low polarity, and especially preferred is hydrogen, nitrogen, or methane.

### EXAMPLES

Hereinbelow, the present invention will be described in more detail with reference to the following Examples and Comparative Examples, which should not be construed as limiting the scope of the present invention.

### [Materials used]

1. Aliphatic polyamide resin (A)
   Polyamide 6 (manufactured by UBE Corporation; relative viscosity = 2.64, as measured at 25°C with respect to 1 g of the polyamide resin which is dissolved in 100 ml of 96% sulfuric acid in accordance with JIS K 6920)
   Polyamide 6 (manufactured by UBE Corporation; relative viscosity = 2.47, as measured at 25°C with respect to 1 g of the polyamide resin which is dissolved in 100 ml of 96% sulfuric acid in accordance with JIS K 6920)
2. Functional group-containing copolymerized polyolefin resin (B): 1.0 g/10 minutes < MFR (230°C; load: 2,160 g) < 5.0 g/10 minutes
   Maleic anhydride-modified ethylene-1-butene copolymer (TAFMER (registered trademark) MH5020, manufactured by Mitsui Chemicals, Inc.; MFR (230°C; load: 2,160 g): 1.2 g/10 minutes)
   Maleic anhydride-modified ethylene-1-butene copolymer (TAFMER (registered trademark) MH5020C, manufactured by Mitsui Chemicals, Inc.; MFR (230°C; load: 2,160 g): 1.2 g/10 minutes)
2'. Functional group-containing polyolefin resin (B') other than functional group-containing copolymerized polyolefin resin (B)
   Maleic anhydride-modified polypropylene resin (ZP 648, manufactured by Prime Polymer Co., Ltd.; MFR (230°C; load: 2,160 g): 55 g/10 minutes)
   Maleic anhydride-modified ethylene-1-butene copolymer (TAFMER (registered trademark) MA8510, manufactured by Mitsui Chemicals, Inc.; MFR (230°C; load: 2,160 g): 5.0 g/10 minutes)
3. Functional group-non-containing olefin homopolymer (C)
   Linear low-density polyethylene resin (Evolue (registered trademark) SP0540, manufactured by Prime Polymer Co., Ltd.)
3'. Functional group-non-containing copolymerized polyolefin resin (C') Ethylene-propylene copolymer (ESPRENE (registered trademark) SP0 V0132, manufactured by Sumitomo Chemical Co., Ltd.)
   Ethylene-1-butene copolymer (TAFMER (registered trademark) TX610, manufactured by Mitsui Chemicals, Inc.)
4. Primary antioxidant (D)
   Phenolic compound: N,N'-Hexamethylenebis(3,5-di-t-butyl-4-hydroxyhydrocinnamamide) (Irganox (registered trademark) 1098, manufactured by BASF Japan Ltd.)
   Phenolic compound: N,N'-Hexamethylenebis(3,5-di-t-butyl-4-hydroxyhydrocinnamamide) (SONGNOX (registered trademark) 1098, manufactured by Songwon Industrial Co., Ltd.)
5. Secondary antioxidant (E)
   Phosphorus compound: Tris(2,4-di-t-butylphenyl) phosphite (SONGNOX (registered trademark) 1680, manufactured by Songwon Industrial Co., Ltd.)
   Phosphorus compound: Tris(2,4-di-t-butylphenyl) phosphite (Irgafos (registered trademark) 168, manufactured by BASF Japan Ltd.)

### Examples 1 to 8 and Comparative Examples 1 to 5

The components shown in Table 1 were melt-kneaded under the below-shown conditions for melt-kneading to prepare pellets of an intended polyamide resin composition. In the formulation shown in Table 1, the unit is % by mass, and the whole of the polyamide resin composition corresponds to 100% by mass.

### <Conditions for melt-kneading>

ZSK32mc Twin-screw extruder (manufactured by Coperion GmbH) was used.
Cylinder diameter: 32 mm
L/D: 48
Screw revolution speed: 250 rpm

### [Evaluation method]

### 1. MFR (230°C; load: 2,160 g)

With respect to the functional group-containing copolymerized polyolefin resin (B) and the other functional group-containing polyolefin resins (B'), an MFR was measured under conditions at a temperature of 230°C and under a load of 2,160 g in accordance with ASTM D1238.

### 2. Flexural modulus and flexural strength

Using individually the pellets in Examples 1 to 8 and Comparative Examples 1 to 5, an ISO Type-B test specimen having a thickness of 4 mm was prepared under the below-shown conditions for injection molding.

### <Conditions for injection molding>

Cylinder temperature: 250°C
Mold temperature: 80°C
In-mold average injection speed: 200 mm/sec
Cooling time: 20 seconds

Using the thus obtained test specimen, a flexural modulus and a flexural strength were measured under conditions in 50% RH at 23°C in accordance with ISO 178. As a measurement apparatus, an automatic plastic flexural tester, Model AG-Xplus (manufactured by Shimadzu Corporation) was used. When the flexural modulus was 1,000 to 2,000 MPa and the flexural strength was 50 to 80 MPa, the molded article was judged to have excellent balance between the stiffness and the flexibility.

### 3. Charpy impact strength

Using individually the pellets in Examples 1 to 8 and Comparative Examples 1 to 5, an ISO Type-B test specimen having a thickness of 4 mm was prepared under the below-shown conditions for injection molding.

### <Conditions for injection molding>

Cylinder temperature: 250°C
Mold temperature: 80°C
In-mold average injection speed: 200 mm/sec
Cooling time: 20 seconds

Using the thus obtained test specimen, a Charpy impact strength (notched) was measured under conditions in 50% RH at 23°C in accordance with ISO 179-1/1eA. As a measurement apparatus, Model 141-PC (manufactured by Yasuda Seiki Seisakusho, Ltd.) was used. When the Charpy impact strength was 20 kJ/m² or more, the molded article was judged to have excellent impact resistance, and, when the Charpy impact strength was 45 kJ/m² or more, the molded article was judged to have especially excellent impact resistance.

**[Table 1]**

| Raw materials | | Physical properties | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|---|---|
| (A) | Polyamide 6 | Relative viscosity: 2.64 | 79.55 | 74.55 | | 79.55 | 84.55 | 84.55 | 84.55 | 86.55 | 79.55 | 84.55 | 79.55 | 84.55 | 84.55 |
| | Polyamide 6 | Relative viscosity: 2.47 | | | 74.55 | | | | | | | | | | |
| (B) | Maleic anhydride-modified ethylene-1-butene copolymer | MFR230°C=1.2g/10 mln | | | | 2000 | 15.00 | 15.00 | | | | | | | |
| | (TAFMER^{®} MH5020) | | | | | | | | | | | | | | |
| | Maleicanhydride-modified ethylene-1-butene copolymer | MFR230°C=1.2g/10 min | 6.80 | 8.30 | 8.30 | | | | 15.00 | 13.00 | | | | | |
| | (TAFMER^{®} MH5020C) | | | | | | | | | | | | | | |
| (B') | Maleic anhydride-modified polypropylene resin (ZP 648) | MFR230°C=55g/10 min | | | | | | | | | 16.00 | 12.00 | 16.00 | 12.00 | |
| | Maleic anhydride.modified elhylene-1-butene copolymer | | | | | | | | | | | | | | |
| | (TAFMER^{®} MAB51 0) | MFR230°C=5.0g/10 mln | | | | | | | | | | | | | 15.00 |
| (c) | Polyethylene resin (Evclue^{®}SP0540) | | 13.20 | 16.70 | 16.70 | | | | | | | | | | |
| (C') | Ethylene-propylene copolymer (ESPRENE^{®}SP0 V0132) | | | | | | | | | | 4.00 | 3.00 | | | |
| | Ethylene-1-butene copolymer (TAFMER^{®}TX610) | | | | | | | | | | | | 4.00 | 3.00 | |
| (D) | Irganox^{®} 1098 (Phenolic compound) | | | | | 0.15 | 0.15 | 0.15 | 0.15 | | 0.15 | 0.15 | 0.15 | 0.15 | 0.15 |
| | SONGNOX^{®} 1098 (Phenolic compound) | | 0.15 | 0.15 | 0.15 | | | | | 0.15 | | | | | |
| (E) | SONGNOX^{®}1680 (Phosphorus compound) | | 0.30 | 0.30 | 0,30 | | | | | 0.30 | | | | | |
| | Irqafas^{®}168 (Phosphorus compound) | | | | | 0.30 | 0.30 | 0.30 | 0.30 | | 0.30 | 0.30 | 0.30 | 0.30 | 0.30 |
| Total | | | 100.00 | 100,00 | 100.00 | 100.00 | 100.00 | 100.00 | 100.00 | 100.00 | 100.00 | 100.00 | 100.00 | 100.00 | 100.00 |
| Physical properties | | Unit | | | | | | | | | | | | | |
| Flexural modulus (50% RH at 23°C, in accordance with ISO 178) | | MPa | 1688 | 1484 | 1589 | 1644 | 1851 | 1878 | 1919 | 1945 | 2241 | 2427 | 2259 | 2377 | 1920 |
| Flexural strength (50% RH at 23°C, in accordance with ISO 178) | | MPa | 70.3 | 60.5 | 68.8 | 655 | 77.2 | 77.8 | 76.8 | 78.4 | 86.3 | 94.6 | 86.8 | 93.6 | 80.4 |
| Charpy impact strength (notched, 50% RH at 23°C, | | | | | | | | | | | | | | | |
| in accordance with ISO 179-1/1eA) | | kJ/m² | 81.5 | 96.1 | 92.8 | 95.7 | 79.3 | 80.4 | 77.2 | 65.9 | 5.0 | 5.4 | 4.6 | 5.1 | 40.3 |

As apparent from Table 1, with respect to the polyamide resin compositions in Examples 1 to 8, each of which comprises the aliphatic polyamide resin (A) in an amount of 52 to 88% by mass, the functional group-containing copolymerized polyolefin resin (B) in an amount of 5 to 25% by mass, the functional group-non-containing olefin homopolymer (C) in an amount of 20% by mass or less, and the primary antioxidant (D) and secondary antioxidant (E) in a total amount of 0.05 to 3.0% by mass, based on 100% by mass of the polyamide resin composition, wherein the functional group-containing copolymerized polyolefin resin (B) has an MFR of more than 1.0 to less than 5.0 g/10 minutes, wherein the polyamide resin composition contains the secondary antioxidant (E) in an amount larger than that of the primary antioxidant (D), a molded article formed from each polyamide resin composition has a flexural modulus and a flexural strength of 1,000 to 2,000 MPa and 50 to 80 MPa, respectively, and has excellent balance between the stiffness and the flexibility, and further has excellent impact resistance, and therefore the polyamide resin composition can be advantageously used as a molded article which is in contact with a high pressure gas. The polyamide resin compositions in the Examples use the primary antioxidant (D) and the secondary antioxidant (E) in combination, and therefore can be prevented from lowering in the mechanical strength due to oxidative deterioration.

With respect to the polyamide resin compositions in Comparative Examples 1 to 4, each of which has incorporated thereinto, instead of the functional group-containing copolymerized polyolefin resin (B), a maleic anhydride-modified polypropylene resin having an MFR of 5.0 g/10 minutes or more, a molded article formed from each polyamide resin composition had a flexural modulus of more than 2,000 MPa and a flexural strength of more than 80 MPa, and thus had poor flexibility, and further had a Charpy impact strength of much lower than 20 kJ/m², and thus had poor impact resistance. With respect to the polyamide resin composition in Comparative Example 5, which has incorporated thereinto a functional group-containing copolymerized polyolefin resin having an MFR of 5.0 g/10 minutes, a molded article formed from the polyamide resin composition had a flexural strength of more than 80 MPa, and thus had poor flexibility, and the molded article was unsuitable as a molded article which is in contact with a high pressure gas.

### Industrial Applicability

The polyamide resin composition of the present invention can be used in the production of various types of molded articles by, for example, injection molding, and can be preferably used for a molded article which is in contact with a high pressure gas.

## Claims

1. A polyamide resin composition comprising an aliphatic polyamide resin (A) in an amount of 52 to 88% by mass, a functional group-containing copolymerized polyolefin resin (B) in an amount of 5 to 25% by mass, a functional group-non-containing olefin homopolymer (C) in an amount of 20% by mass or less, and a primary antioxidant (D) and a secondary antioxidant (E) in a total amount of 0.05 to 3.0% by mass, based on 100% by mass of the polyamide resin composition,
the functional group-containing copolymerized polyolefin resin (B) has an MFR of more than 1.0 to less than 5.0 g/10 minutes, as measured at a temperature of 230°C and under a load of 2,160 g in accordance with ASTM D1238,
the polyamide resin composition contains the secondary antioxidant (E) in an amount larger than that of the primary antioxidant (D).

2. The polyamide resin composition according to claim 1, wherein the functional group-containing copolymerized polyolefin resin (B) has an MFR of more than 1.0 to 3.0 g/10 minutes, as measured at a temperature of 230°C and under a load of 2,160 g in accordance with ASTM D1238.

3. The polyamide resin composition according to claim 1 or 2, wherein the aliphatic polyamide resin (A) has a relative viscosity of 2.2 to 2.8, as measured at 25°C with respect to 1 g of the polyamide resin which is dissolved in 100 ml of 96% sulfuric acid in accordance with JIS K 6920.

4. The polyamide resin composition according to any one of claims 1 to 3, which contains the aliphatic polyamide resin (A) in an amount of 60 to 88% by mass, based on 100% by mass of the polyamide resin composition.

5. The polyamide resin composition according to any one of claims 1 to 4, which contains the functional group-containing copolymerized polyolefin resin (B) in an amount of 6 to 22% by mass, based on 100% by mass of the polyamide resin composition.

6. The polyamide resin composition according to any one of claims 1 to 5, which contains the functional group-non-containing olefin homopolymer (C) in an amount of 5 to 20% by mass, based on 100% by mass of the polyamide resin composition.

7. The polyamide resin composition according to any one of claims 1 to 6,
wherein the content of the primary antioxidant (D) in 100% by mass of the polyamide resin composition is 0.02 to less than 1.5% by mass.

8. The polyamide resin composition according to any one of claims 1 to 7,
wherein the content of the secondary antioxidant (E) in 100% by mass of the polyamide resin composition is 0.03 to 2.98% by mass.

9. The polyamide resin composition according to any one of claims 1 to 8,
wherein the primary antioxidant (D) is at least one member selected from the group consisting of a phenolic compound and an amine compound.

10. The polyamide resin composition according to any one of claims 1 to 9,
wherein the secondary antioxidant (E) is at least one member selected from the group consisting of a phosphorus compound and a sulfur compound.

11. The polyamide resin composition according to any one of claims 1 to 10, which has a flexural modulus (in 50% RH at 23°C) of 1,000 to 2,000 MPa and a flexural strength (in 50% RH at 23°C) of 50 to 80 MPa, as obtained in accordance with ISO 178.

12. The polyamide resin composition according to any one of claims 1 to 11, which has a Charpy impact strength (notched, in 50% RH at 23°C) of 20 kJ/m² or more, as obtained in accordance with ISO 179-1/1eA.

13. The polyamide resin composition according to any one of claims 1 to 12, which has a Charpy impact strength (notched, in 50% RH at 23°C) of 45 kJ/m² or more, as obtained in accordance with ISO 179-1/1eA.

14. The polyamide resin composition according to any one of claims 1 to 13, which is for use in a molded article which is in contact with a high pressure gas.
